# EUROPEAN PATENT APPLICATION

(11) **EP 4 703 193 A2**
(43) Date of publication of application: **04.03.2026**
(21) Application number: 25198392.0
(22) Date of filing: 27.08.2025
(51) Int. Cl.: B60M 1/12, B60M 1/20, B60M 1/28, B61L 27/53

(54) **OVERHEAD LINE SYSTEMS**

(30) Priority: 30.08.2024 GB 202412719
(71) Applicant: Siemens Mobility Limited, London, NW1 2PL (GB)
(72) Inventor: Brend, Graham, Bathford, Bath, BA1 7UE (GB); Kyd, Graham, Staverton, Trowbridge, BA14 8UY (GB)
(74) Representative: Siemens Patent Attorneys

(57) **Abstract**

An overhead line system for providing electrical power to an electric locomotive travelling on a railway line is disclosed. The overhead line system comprises a contact wire apparatus for carrying electrical current from a power source to an electric locomotive, a support apparatus comprising ground-engaging supports spaced at intervals along the length of the railway line and a carrier apparatus extending between ground engaging supports at an elevated position, the carrier apparatus being connected to and supporting the contact wire above the railway line, and a tension measuring system for measuring tension in one or both of the carrier apparatus and the contact wire.

## Description

### Field of the Disclosure

The present disclosure relates to overhead line systems for supplying electrical power to electric locomotives.

### Background of the Disclosure

Electric locomotives may be provided with electrical power to drive an onboard traction motor via an overhead electricity line suspended above the railway line, with which the locomotive maintains electrical contact as it travels along the railway line. Such overhead lines may however be susceptible to failure, for example, in result of mechanical degradation in use, or damage by extreme weather events. For example, the overhead lines may stretch over time, and/or the supporting structure may fail or collapse. Conventionally such failures may be detected by way of manual periodic inspection of the overhead line equipment. However, this may undesirably result in operational interruption to the rail service, both prior to detection of the fault, and in organising remedial works to fix the failure. Fast detection, or even advance warning, of such failures may desirably enable an operator of railway infrastructure to take pre-emptive action to avoid such operational interruption.

### Summary of the Disclosure

An objective of the present disclosure is to provide a convenient means for monitoring tension in overhead line systems, to thereby facilitate improved detection, or even advance warning, of equipment failure.

A first aspect of the present disclosure provides an overhead line system for supplying electrical power to an electric locomotive travelling on a railway line, the system comprising: a contact wire apparatus for carrying electrical current from a power source to an electric locomotive, a support apparatus comprising ground-engaging supports spaced at intervals along the length of the railway line and a carrier apparatus extending between ground engaging supports at an elevated position, the carrier apparatus being connected to and supporting the contact wire above the railway line, and a tension monitoring system for monitoring tension in one or both of the carrier apparatus and the contact wire.

The tension monitoring system may thus detect abnormal tension in the carrier apparatus or in the contact wire. The railway operator may subsequently choose to perform maintenance on the overhead line equipment to address the fault causing the abnormal tension. **In** particular, because the tension monitoring system may conveniently continuously monitor the tension, abnormal tension may be detected relatively quickly, potentially even before the abnormal tension causes an operational fault or failure. Thus, the railway operator may respond quickly to faults, or even perform preventative maintenance before a problem occurs.

In implementations, the tension monitoring system comprises a strain gauge arranged to measure the tension in the carrier apparatus or in the contact wire.

In implementations, the carrier apparatus comprises one or more carrier cables connected to and extending between the ground engaging supports and the contact wire is connected to and supported by the carrier cables, and the tension monitoring system is for monitoring tension in the carrier cables.

The tension in the carrier cables is representative of the tension in the contact wire, inasmuch that the carrier cables support and tension the contact wire. Hence, monitoring of the tension in the carrier cables enables indirect detection of incorrect tensioning in the contact wire. Monitoring of tension in the carrier cables may be relatively more convenient than monitoring tension in the contact wire due to the electrical current carried by the contact wire.

In implementations, the monitoring tension comprises measuring the tension, evaluating the tension, and generating an alert signal if the evaluation meets an alert condition.

In implementations, the evaluating the tension comprises comparing the measured tension to a predefined threshold value.

In implementations, the tension monitoring system is for monitoring tension at a plurality of spatially separated positions along one or both of the carrier apparatus and the contact wire.

In implementations, the tension monitoring system is configured to compare the plural monitored tension values, and generate an alert signal if a difference between the plural monitored tension values exceeds a threshold value.

In implementations, the tension monitoring system comprises plural tension monitoring modules, each tension monitoring module being installed at and arranged to monitor tension at a respective one of the plurality of spatially separated positions.

**In** implementations, each of the tension monitoring modules comprises an integrated battery power source to supply electrical power to electrical components of the respective tension monitoring module.

**In** implementation, the tension monitoring modules are configured to communicate monitored tension values with other of the tension monitoring modules.

**In** implementations, the tension monitoring system comprises a central monitoring system in communication with at least one of the tension monitoring modules, and the central monitoring system is configured to communicate with the other of the tension monitoring modules via the at least one of the tension monitoring modules.

**In** implementations, the tension monitoring system comprises one or both of a wind measuring system to measure wind speed and a temperature measuring system to measure air temperature, and the tension monitoring system is configured to adjust the tension value based on one or both of the measured wind speed and air temperature, wherein the evaluating the tension comprises evaluating the adjusted tension value.

**In** implementations, the tension monitoring system is configured to monitor the tension at a plurality of time steps, wherein the evaluating the tension comprises comparing the tension values at the plural time steps.

**In** implementations, the tension monitoring system is configured to monitor the tension at a plurality of time steps, wherein the evaluating the tension comprises determining an average tension value of the plural monitored values and evaluating the average tension value.

**In** implementations, the tension monitoring system is configured to periodically measure the tension in one or both of the carrier apparatus and the contact wire, and in response to generation of the alert signal the tension monitoring system is configured to increase a frequency of monitoring of the tension.

**In** implementations, the central monitoring system is functional to generate a human perceptible representation of the monitored tension values, and the central monitoring system is configurable to enable a user to select a subset of the tension monitoring modules to generate the human perceptible representation of the tension values monitored by the subset of tension monitoring modules.

These and other aspects of the invention will be apparent from the embodiment(s) described below.

### Brief Description of the Drawings

In order that the present invention may be more readily understood, embodiments of the invention will now be described, by way of example, with reference to the accompanying drawings, in which:
Figure 1 shows schematically an example of a railway embodying the present disclosure, comprising an overhead line system for supplying electrical power to an electric locomotive;
Figure 2 shows schematically a partial view of the overhead line system, which includes a tension monitoring system for monitoring tension in the overhead line system;
Figure 3 shows schematically the tension monitoring system;
Figure 4 shows schematically hardware for implementing aspects of the tension monitoring system;
Figure 5 shows schematically hardware for implementing further aspects of the tension monitoring system;
Figure 6 shows schematically a method for monitoring tension in the overhead line system using the tension monitoring system; and
Figure 7 shows schematically processes involved in the method for monitoring tension in the overhead line system.

### Detailed Description of the Disclosure

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

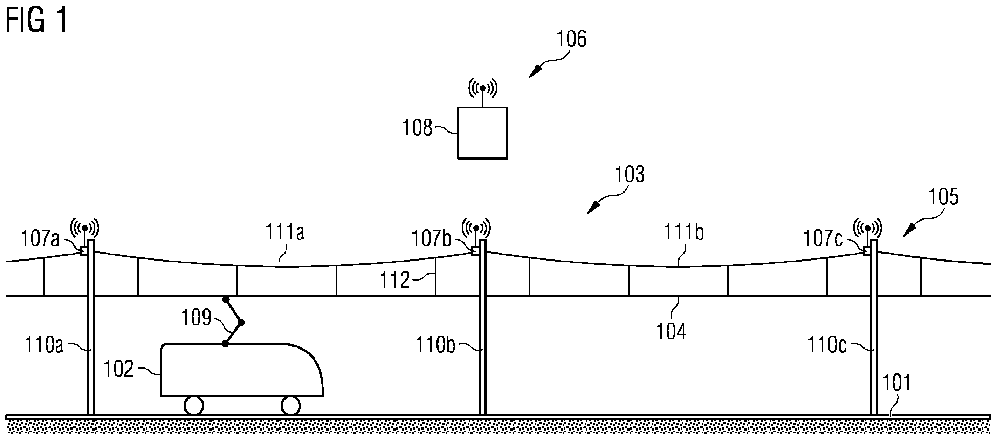

An example of a railway embodying aspects of the present disclosure is depicted schematically in Figure 1.

The railway comprises railway track 101, locomotive 102, and overhead line system 103. The locomotive 102 runs on the track 101 and receives electrical power to power a traction motor of the train from the overhead line system 103.

The overhead line system 103 comprises a contact wire 104, support apparatus 105 for supporting the contact wire 104, and a tension monitoring system 106. The tension monitoring system 106 comprises a plurality of tension monitoring modules 107a to 107c and a central monitoring system 108.

The contact wire 104 is suspended by the support apparatus 105 above the railway track 101 to extend lengthwise along the railway track. The contact wire 105 is electrically connected to a power source, for example, an electrical substation, and presents an exposed conductor that the train 102 may contact by way of pantograph 109 to draw electrical power.

The support apparatus 105 comprises a plurality of ground-engaging supports 110a to 110c, and a carrier apparatus comprising plural carrier cables 111a and 111b and plural dropper cables 112.

The ground-engaging supports, for example, gantries, are installed at intervals along the length of the railway track 101 for example, approximately every hundred metres. The series of carrier cables 111 are each connected at either end to a neighbouring pair of the supports 110 and extend therebetween, for example, carrier cable 111a extends between supports 110a and 110b, and carrier cable 111b extends between supports 110b and 110c. The contact cable 104 is suspended from the carrier cables 111 by way of dropper cables 112.

The support apparatus 105 serves to stably suspend the contact wire 104, such that the contact wire 104 is held in the correct position and at the correct mechanical tension to properly maintain electrical contact with the pantograph of the locomotive 102 in use. Failure of the support apparatus 105, for example, excessive stretching of one of the carrier cables 111 or collapse of a gantry 110, could result in incorrect tensioning of the contact wire 104. Such incorrect tensioning of the contact wire 104 could result in poor electrical contact between the contact wire 104 and the pantograph 109, which may interrupt the power supply to the locomotive 102, and could even cause the contact wire 104 to snap due to excessive mechanical oscillations.

Conventionally such failures may be detected by way of manual periodic inspection of the overhead line equipment, for example, by visual inspection of the appearance of the catenary cable. However, this conventional approach to failure detection may be relatively time-inefficient and slow. This could undesirably result in operational interruption to the rail service, both because detection of the fault could be delayed by the wait for the next periodic inspection following failure, and/or by the time incurred to organise suitable remedial works once the failure has been detected. This may undesirably result in additional expense being incurred by the railway operator, and a poor rail service for passengers.

The present disclosure thus employs the tension monitoring system 106 for monitoring the tension in the carrier cables 111, to detect and even predict incorrect tensioning of the carrier cables 111 and so the contact wire 104.

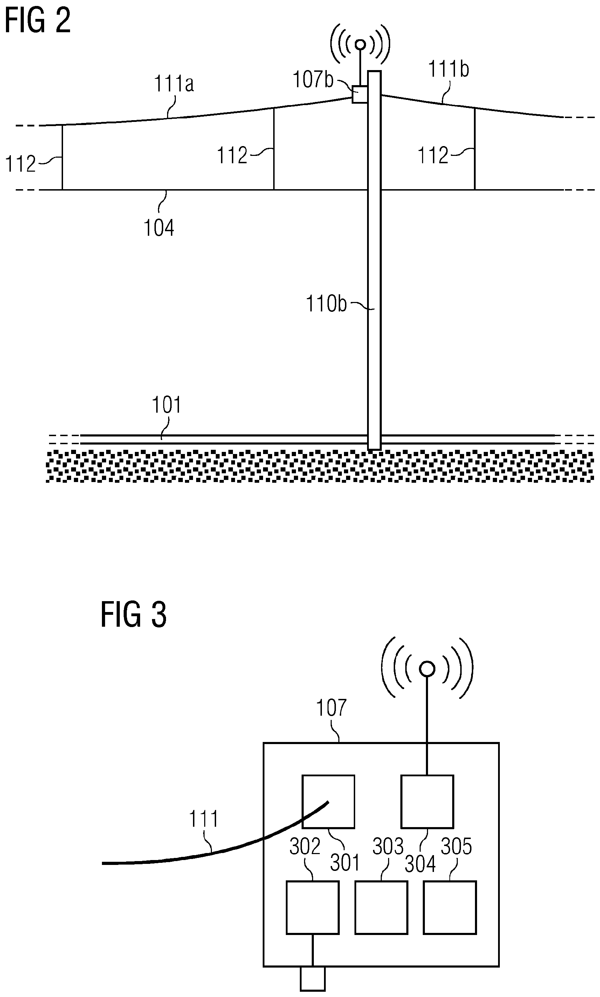

Referring next in particular to Figure 2, the plurality of tension monitoring modules 107 are rigidly mounted at an elevated position to a respective one of the gantries 110, and function to mechanically attach an end of a respective carrier cable 111 to the respective gantry. The carrier cables 111 are thereby tensioned by the respective tension monitoring module 107. Each of the tensioning monitoring modules 107 is configured to monitor, that is to measure and evaluate, tension in the respective carrier cable 111, and communicate information representing the measurement and/or the evaluation to the central monitoring system 108. In the example, each of the tension monitoring modules 107 and the central monitoring system 108, is equipped with wireless data communication equipment, such that they may communicate with one another wirelessly.

The tension in the carrier cables 111 is representative of the tension in the contact wire 104, inasmuch that the carrier cables 111 support and tension the contact wire 104. Hence, monitoring of the tension in the carrier cables 111 enables indirect detection of incorrect tensioning in the contact wire 104. Alternatively, the tensioning monitoring system 106 could be employed for measuring tension in the dropper wires 112, or even for directly measuring tension in the contact wire 104.

In cases of failure of the support apparatus, for example, stretching of a carrier cable 111 or collapse of a gantry 110, the tension applied by the carrier cable to the respective tension monitoring module 107 may be measurably reduced or increased. Where a tensioning monitoring module 107 determines the tension in the carrier cable to be incorrect, for example, excessively high or low, it may transmit an alert signal to the central monitoring system 108, to thereby alert the railway operator to the potential fault. The railway operator may subsequently choose to perform maintenance on the overhead line equipment to address the fault. In particular, because the tension monitoring system 106 may continuously measure and evaluate tension in the carrier cables 111, incorrect tension may be detected relatively quickly, potentially even before the incorrect tension causes an operational fault or failure. Thus, the railway operator may respond quickly to faults, or even perform preventative maintenance before a fault occurs.

Referring next particularly to Figure 3, in examples each of the tension monitoring modules 107 comprises a tension sensor 301, an ambient condition sensor 302, a data processing system 303, a wireless communications system 304, and a power supply 305.

The tension sensor 301 is arranged to be sensitive to tension in the carrier cable 111. For example, the carrier cable 111 could be anchored to the gantry 110 by the tension sensor 301, such that all tension force in the carrier cable is transmitted through the tension sensor. Alternatively the tension sensor 301 could just be acted on by the carrier cable 111, in a way that the force applied by the carrier cable to the tension sensor is representative of the tension in the carrier cable. The tension sensor 301 could, for example, be a strain gauge, arranged to be strained by the carrier cable 111.

The ambient condition sensor 302 is arranged to measure the ambient air temperature and wind speed. For example, the ambient condition sensor may comprise a thermometer to measure the air temperature and an anemometer to measure the wind speed.

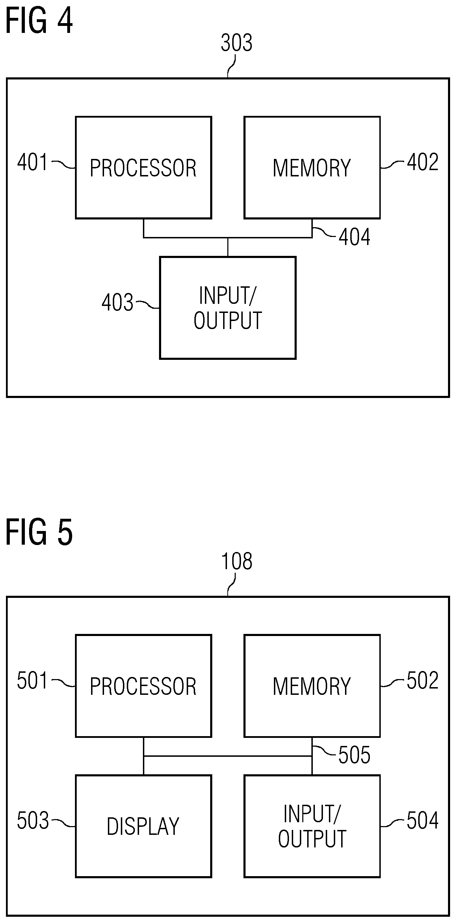

The data processing system 303 is configured to measure the tension in the carrier cable 111 using the tension sensor 301, and measure the ambient temperature and wind speed conditions using the ambient condition sensor 302. The data processing system 303 is configured also to evaluate the measured tension, with reference to the measured wind and temperature conditions, detect incorrect tension in the carrier cable, and transmit alert signals to the central monitoring system 108. The data processing system will be described in further detail with reference to Figure 4.

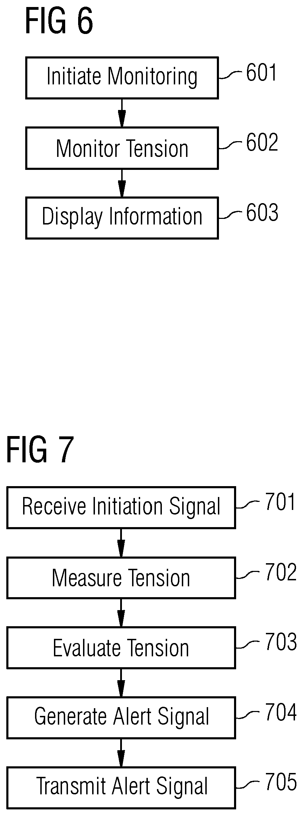

The wireless communications system 304 is configured to enable wireless radio communications between the plural tension monitoring modules 107, and between the central monitoring system 108 and one or more of the plural tension monitoring modules 107, as will be described further with reference to Figure 7.

The power supply 305 is provided to supply electrical power to the aforementioned components of the tension monitoring module 107. For example, the power supply 305 could comprise a battery, and/or a solar panel. Alternatively, the power supply 305 could draw electrical power from the contact wire 104, and suitably transform the electrical power to supply the components of the tension monitoring module.

Referring next to Figure 4, in examples the data processing system 303 of each of the tension monitoring modules 107 comprises processor 401, memory 402, input/output device 403, and system bus 404.

Processor 401 is configured for execution of instructions of a computer program for monitoring tension in the respective carrier cable 111. Memory 402 is configured for non-volatile storage of the computer program, defining machine-readable instructions, for execution by the processor, and for serving as read/write memory for storage of operational data associated with the computer program executed by the processor 401. Input/output interface 403 is configured for connection of the data processing system 303 to the tension sensor 301, the ambient condition sensor 302, the wireless communications system 304, and power supply 305. The components of the data processing system 303 are in communication via system bus 404.

Referring next to Figure 5, in examples the central monitoring system 108 of the tension monitoring system 106 comprises processor 501, memory 502, display 503, input/output device 504, and system bus 505.

Processor 501 is configured for execution of instructions of a computer program for monitoring tension in the carrier apparatus by communicating with the tension monitoring modules 107, and for generating a graphical user interface to visualise the tension information. Memory 502 is configured for non-volatile storage of the computer program, defining machine-readable instructions, for execution by the processor, and for serving as read/write memory for storage of operational data associated with the computer program executed by the processor 201. Display 503 is configured for displaying a graphical user interface visualising the tension information, to aid a user's understanding of the information and interaction with the computer program. Input/output interface 504 is configured for communication of the central monitoring system 108 with the tension monitoring modules 107. For example, input/output interface 504 may support wireless radio communication with the tension monitoring modules 107. Input/output interface 504 may also permit connection of a human-machine interface device, to enable a user to interact with the computer program. The components of the central monitoring system 108 are in communication via system bus 505.

Referring next to Figure 6, in implementations the method for monitoring the tension in the carrier cables 111 using the tension monitoring system 106 involves three processes. Processes 601 and 603 are performed by the central monitoring system 108, whereas process 602 is performed by the plural tension monitoring modules 107.

At process 601, the computer program causes the processor 501 of the central monitoring system 108 to initiate the monitoring process. Process 601 could, for example, occur in response to a user input to the central monitoring system, and could involve the central data monitoring system transmitting wireless radio commands to the tension monitoring modules 107 to instruct the tension monitoring modules to begin monitoring tension in the carrier cables 111.

At stage 602, the computer program running on each of the tension monitoring modules 107 causes the processor 401 to monitor tension on the respective carrier cable 111, and transmit information regarding the monitored tension back to the central monitoring system 108. Processes involved in stage 602 will be described in further detail with reference to Figure 7.

At stage 603, the computer program running on the central monitoring system 108 causes the processor 501 of the central monitoring system 108 to receive the information output by the tension monitoring modules 107, and to display via the graphical user interface and the display 503 a visual representation of the information. For example, where alert signals are received from one or more of the tension monitoring modules 107, the graphical user interface may display an icon superimposed on a map to represent a location of the alerting tension monitoring module. Additionally or alternatively, the central monitoring system 108 could comprise a loudspeaker for generating an audible alert in addition to or instead of the graphical display. Process 603 could, for example, involve the user of the central monitoring system 108 selecting a particular section of railway line to be inspected. Thus, in response to a user selecting a section of line to be monitored, the graphical user interface could, for example, display a representation of only the selected section of track, and include icons relating to faults only on that section of line.

Referring next to Figure 7, in implementations the method for monitoring the tension in the carrier cables 111 implemented by each of the tension monitoring modules 107 comprises five processes.

At process 701, the computer program causes the processor 401 of each tension monitoring module 107 to receive the initiation signal output by the central monitoring system 108. In examples process 701 may involve each tension monitoring module 107 receiving the wireless communication directly from the central monitoring system 108. In other examples, the initiation signal could be transmitted by the central monitoring system 108 to a subset of the tension monitoring modules 107, for example, to one of the modules 107, and the subset of the modules 107 may then onwardly forward the initiation command to the other of the modules 107. This latter approach may be particularly useful where a direct line of communication does not exist between each tension monitoring module 107 and the central monitoring system 108, which situation might exist, for example, where a tension monitoring module is located a long distance from the central monitoring system 108 or where it is otherwise not possible to establish direct communication between the central monitoring system 108 and a tension monitoring module.

At process 702, the computer program causes the processor 401 of each tension monitoring module 107 to measure tension in the respective carrier cable using the respective tension sensor 301.

At process 703, the computer program causes the processor 201 of each tension monitoring module 107 to evaluate the measured tension, to determine whether the measured tension is considered normal or abnormal. Process 703 could, for example, involve the processor 401 comparing the measured tension value to a predefined threshold value, or comparing the measured tension value to earlier historic measured tension values, or to tension values measured by other of the tension monitoring modules 107, which other tension values could be communicated between the tension monitoring modules 107. Process 703 could involve the processor 201 inputting the measured tension values into a trained machine learning model, to classify the tension values as either normal or abnormal. Process 703 could involve the processor 401 accounting for the prevailing ambient temperature and/or wind conditions when evaluating the measured tension value. This approach may thereby accommodate normal variation in carrier cable tension that may be attributed to temperature and wind conditions, and thereby avoid falsely evaluating a tension value as indicative of a fault condition merely due to prevailing weather conditions.

At process 704, the computer program causes the processor 401 of each tension monitoring module 107 to generate an alert signal in the event that the tension of the respective carrier cable is determined at process 703 to be abnormal, for example, excessively high or low.

At process 705, the computer program causes the processor 401 of each tension monitoring module 107 to transmit the alert signal, and/or other information relating to the carrier cable tension, to the central monitoring system 108. As with process 701, process 705 could involve each tension monitoring module communicating directly with the central monitoring system, or could involve the tension monitoring modules 107 relaying alert signals between themselves before a subset of the tension monitoring modules then communicate the signals to the central monitoring system.

The system and apparatus described above may use dedicated processor systems, micro controllers, programmable logic devices, microprocessors, or any combination thereof, to perform some or all of the operations described herein. Some of the operations described above may be implemented in software and other operations may be implemented in hardware. Any of the operations, processes, and/or methods described herein may be performed by an apparatus, a device, and/or a system substantially similar to those as described herein and with reference to the illustrated figures. References herein to a device, or similar, do not imply a unitary apparatus, and instead include a system of components, which may or may not be co-located.

The processor may execute instructions or "code" stored in memory. The memory may store data as well. The processing device may include, but may not be limited to, an analog processor, a digital processor, a microprocessor, a multi-core processor, a processor array, a network processor, or the like. The processing device may be part of an integrated control system or system manager, or may be provided as a portable electronic device configured to interface with a networked system either locally or remotely via wireless transmission.

The memory may be integrated together with the processing device, for example RAM or FLASH memory disposed within an integrated circuit microprocessor or the like. In other examples, the memory may comprise an independent device, such as an external disk drive, a storage array, a portable FLASH key fob, or the like. The memory and processing device may be operatively coupled together, or in communication with each other, for example by an I/O port, a network connection, or the like, and the processing device may read a file stored on the memory. Associated memory may be "read only" by design (ROM) by virtue of permission settings, or not. Other examples of memory may include, but may not be limited to, WORM, EPROM, EEPROM, FLASH, or the like, which may be implemented in solid state semiconductor devices. Other memories may comprise moving parts, such as a known rotating disk drive. All such memories may be "machine-readable" and may be readable by a processing device.

Operating instructions or commands may be implemented or embodied in tangible forms of stored computer software (also known as "computer program" or "code"). Programs, or code, may be stored in a digital memory and may be read by the processing device. "Computer-readable storage medium" (or alternatively, "machine-readable storage medium") may include all of the foregoing types of memory, as well as new technologies of the future, as long as the memory may be capable of storing digital information in the nature of a computer program or other data, at least temporarily, and as long at the stored information may be "read" by an appropriate processing device. The term "computer-readable" may not be limited to the historical usage of "computer" to imply a complete mainframe, mini-computer, desktop or even laptop computer. Rather, "computer-readable" may comprise storage medium that may be readable by a processor, a processing device, or any computing system. Such media may be any available media that may be locally and/or remotely accessible by a computer or a processor, and may include volatile and non-volatile media, and removable and non-removable media, or any combination thereof.

A program stored in a computer-readable storage medium may comprise a computer program product. For example, a storage medium may be used as a convenient means to store or transport a computer program. For the sake of convenience, the operations may be described as various interconnected or coupled functional blocks or diagrams. However, there may be cases where these functional blocks or diagrams may be equivalently aggregated into a single logic device, program or operation with unclear boundaries.

While the application describes specific examples of carrying out embodiments of the invention, those skilled in the art will appreciate that there are numerous variations and permutations of the above described systems and techniques that fall within the spirit and scope of the invention as set forth in the appended claims. For example, while specific terminology has been employed above to refer to electronic design automation processes, it should be appreciated that various examples of the invention may be implemented using any desired combination of electronic design automation processes.

One of skill in the art will also recognize that the concepts taught herein can be tailored to a particular application in many other ways. **In** particular, those skilled in the art will recognize that the illustrated examples are but one of many alternative implementations that will become apparent upon reading this disclosure.

Although the specification may refer to "an", "one", "another", or "some" example(s) in several locations, this does not necessarily mean that each such reference is to the same example(s), or that the feature only applies to a single example.

## Claims

1. An overhead line system for supplying electrical power to an electric locomotive travelling on a railway line, the system comprising:
a contact wire apparatus for carrying electrical current from a power source to an electric locomotive,
a support apparatus comprising ground-engaging supports spaced at intervals along the length of the railway line and a carrier apparatus extending between ground engaging supports at an elevated position, the carrier apparatus being connected to and supporting the contact wire above the railway line, and
a tension monitoring system for monitoring tension in one or both of the carrier apparatus and the contact wire.

2. The overhead line system of claim 1, wherein the tension monitoring system comprises a strain gauge arranged to measure the tension in the carrier apparatus or in the contact wire.

3. The overhead line system of claim 1 or claim 2, wherein the carrier apparatus comprises one or more carrier cables connected to and extending between the ground engaging supports and the contact wire is connected to and supported by the carrier cables, and the tension monitoring system is for monitoring tension in the carrier cables.

4. The overhead line system of any one of the preceding claims, wherein the monitoring tension comprises measuring the tension, evaluating the tension, and generating an alert signal if the evaluation meets an alert condition.

5. The overhead line system of claim 4, wherein the evaluating the tension comprises comparing the measured tension to a predefined threshold value.

6. The overhead line system of any one of the preceding claims, wherein the tension monitoring system is for monitoring tension at a plurality of spatially separated positions along one or both of the carrier apparatus and the contact wire.

7. The overhead line system of claim 6, wherein the tension monitoring system is configured to compare the plural monitored tension values, and generate an alert signal if a difference between the plural monitored tension values exceeds a threshold value.

8. The overhead line system of claim 6, wherein the tension monitoring system comprises plural tension monitoring modules, each tension monitoring module being installed at and arranged to monitor tension at a respective one of the plurality of spatially separated positions.

9. The overhead line system of claim 8, wherein each of the tension monitoring modules comprises an integrated battery power source to supply electrical power to electrical components of the respective tension monitoring module.

10. The overhead line system of claim 8 or claim 9, wherein the tension monitoring modules are configured to communicate monitored tension values with other of the tension monitoring modules.

11. The overhead line system of any one of claims 8 to 10, wherein the tension monitoring system comprises a central monitoring system located remotely of and in communication with at least one of the tension monitoring modules, and the central monitoring system is configured to communicate with the other of the tension monitoring modules via the at least one of the tension monitoring modules.

12. The overhead line system of claim 4, wherein the tension monitoring system comprises one or both of a wind measuring system to measure wind speed and a temperature measuring system to measure air temperature, and the tension monitoring system is configured to adjust the tension value based on one or both of the measured wind speed and air temperature, wherein the evaluating the tension comprises evaluating the adjusted tension value.

13. The overhead line system of claim 4, wherein the tension monitoring system is configured to monitor the tension at a plurality of time steps, wherein the evaluating the tension comprises comparing the tension values at the plural time steps.

14. The overhead line system of claim 4, wherein the tension monitoring system is configured to monitor the tension at a plurality of time steps, wherein the evaluating the tension comprises determining an average tension value of the plural monitored values and evaluating the average tension value.

15. The overhead line system of claim 4, wherein the tension monitoring system is configured to periodically measure the tension in one or both of the carrier apparatus and the contact wire, and in response to generation of the alert signal the tension monitoring system is configured to increase a frequency of monitoring of the tension.

16. The overhead line system of claim 11, wherein the central monitoring system is functional to generate a human perceptible representation of the monitored tension values, and the central monitoring system is configurable to enable a user to select a subset of the tension monitoring modules to generate the human perceptible representation of the tension values monitored by the subset of tension monitoring modules.
